# EUROPEAN PATENT SPECIFICATION

(11) **EP 3 733 510 B1**
(45) Date of publication and mention of the grant of the patent: **17.11.2021**
(21) Application number: 20168838.9
(22) Date of filing: 08.04.2020
(51) Int. Cl.: B64C 27/82

(54) **ELECTRICALLY-POWERED SWIVELING TAIL ROTOR SYSTEMS**
ELEKTRISCH ANGETRIEBENE SCHWENKBARE HECKROTORSYSTEME
SYSTÈMES DE ROTOR DE QUEUE PIVOTANT À ÉNERGIE ÉLECTRIQUE

(30) Priority: 29.04.2019 US 201916398106
(43) Date of publication of application: 04.11.2020
(73) Proprietor: Bell Helicopter Textron Inc., Fort Worth, TX 76101 (US)
(72) Inventor: CHOI, Jouyoung Jason, Fort Worth, TX Texas 76101 (US); ROBERTSON, Daniel Bryan, Fort Worth, TX Texas 76101 (US)
(74) Representative: Barker Brettell LLP

(56) References cited:
- EP-A1- 2 407 377
- EP-A1- 2 933 187
- EP-A1- 3 251 952
- US-A1- 2014 158 816

## Description

### BACKGROUND

This section is intended to provide background information to facilitate a better understanding of various technologies described herein. As the section's title implies, this is a discussion of related art. That such art is related in no way implies that it is prior art. The related art may or may not be prior art. It should therefore be understood that the statements in this section are to be read in this light, and not as admissions of prior art. EP3251952 discloses an anti-torque assembly for a helicopter comprising a plurality of fixed blade pitch motors mounted on one or more pivots on the tail boom of the helicopter, wherein the plurality of fixed blade pitch motors on the one or more pivots are adapted to be oriented substantially in-plane with a tail boom of a helicopter during a first mode of operation that comprises a hover mode and wherein the fixed blade pitch motors are adapted to be oriented substantially off-plane from the tail boom of the helicopter during a second mode of helicopter operation that is different from the first mode.

Currently, compound helicopters (i.e., rotorcrafts) require separate systems for anti-torque and forward-flight propulsion. Moreover, tail rotors of such compound helicopters are powered by a main engine (i.e., powerplant) (e.g., a traditional piston engine or a light-weight turbine) through a drive shaft connection. However, such drive shafts are obtrusive in design and can limit the swiveling capabilities of a tail rotor; thus, preventing rotatory or fan blades of the tail rotor from rotation in a full range of directions.

### SUMMARY

A tail rotor system according to the invention is set out in claim 1. Optional features are set out in the dependent claims.

### BRIEF DESCRIPTION OF THE DRAWINGS

The present technique(s) will be described further, by way of example, with reference to embodiments thereof as illustrated in the accompanying drawings. It should be understood, however, that the accompanying drawings illustrate only the various implementations described herein and are not meant to limit the scope of various techniques, methods, systems, or apparatuses described herein.
FIGS. 1A to 1C illustrate perspective views of a tail rotor system in accordance with implementations of various techniques described herein.
FIG. 2 illustrates a perspective view of a tail rotor system in accordance with implementations of various techniques described herein.
FIG. 3 illustrates a perspective view of a tail rotor system in accordance with implementations of various techniques described herein.

Reference is made in the following detailed description to accompanying drawings, which form a part hereof, wherein like numerals may designate like parts throughout that are corresponding and/or analogous. It will be appreciated that the figures have not necessarily been drawn to scale, such as for simplicity and/or clarity of illustration. For example, dimensions of some aspects may be exaggerated relative to others. Further, it is to be understood that other embodiments may be utilized. Furthermore, structural and/or other changes may be made without departing from claimed subject matter. References throughout this specification to "claimed subject matter" refer to subject matter intended to be covered by one or more claims, or any portion thereof, and are not necessarily intended to refer to a complete claim set, to a particular combination of claim sets (e.g., apparatus claims, etc.), or to a particular claim. It should also be noted that directions and/or references, for example, such as up, down, top, bottom, and so on, may be used to facilitate discussion of drawings and are not intended to restrict application of claimed subject matter. Therefore, the following detailed description is not to be taken to limit claimed subject matter.

### DETAILED DESCRIPTION

Example embodiments of the present disclosure combine forward-flight propulsion and anti-torque systems into one system without any "swiveling" (i.e., to swing or turn as on a pivot) range constraints (due to a drive train system). Suitably, such embodiments provide for a tail rotor system that does not require a drive train system (including a drive shaft) to transfer power from the main power source (e.g., a powerplant) of a rotorcraft to a tail rotor.

Advantageously, inventive aspects of the present disclosure allow for a tail rotor spindle with the capacity to provide for a full range of tail rotor swivel rotation. As a further advantage, to further reduce parts and lower cost, an additional rotation gear box that had been necessary in driveshaft assembly may also be eliminated.

In addition, in contrast to conventional rotorcrafts that may employ collective control to change an amount of thrust (i.e., thrust level), in the present disclosure, the tail rotor system may be configured to change a thrust vector by rotor speed control (i.e., RPM control). Moreover, as rotation from a forward-flight mode to a hover mode occurs at the tail rotor system itself, no "offset" vertical swiveling may be required at locations proximate to the tailboom of a rotorcraft outside of the tail rotor system.

As referenced throughout the following description, directional axes': X-axis, Y-axis, Z-axis may be orthogonal to one another in a three-dimensional space.

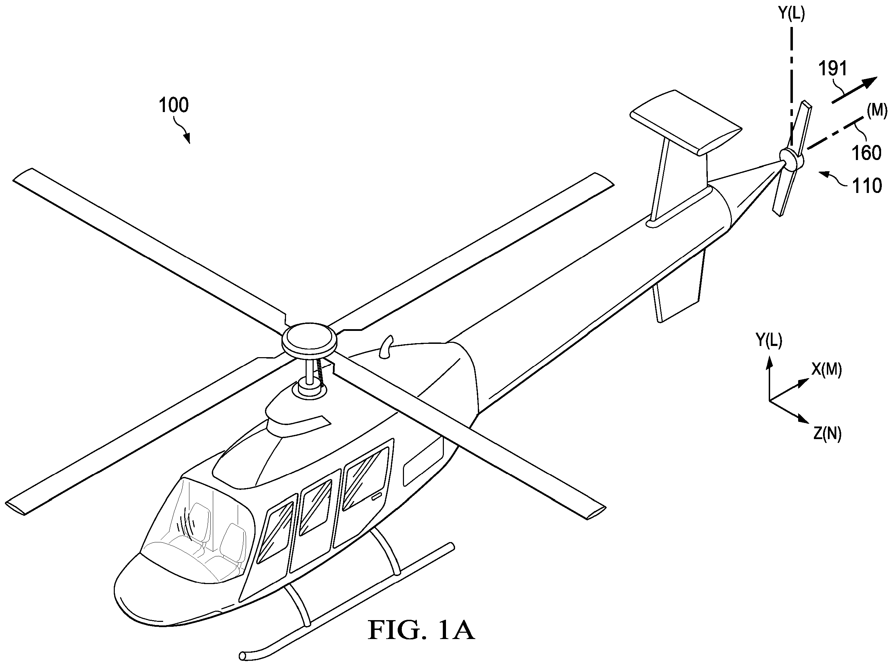

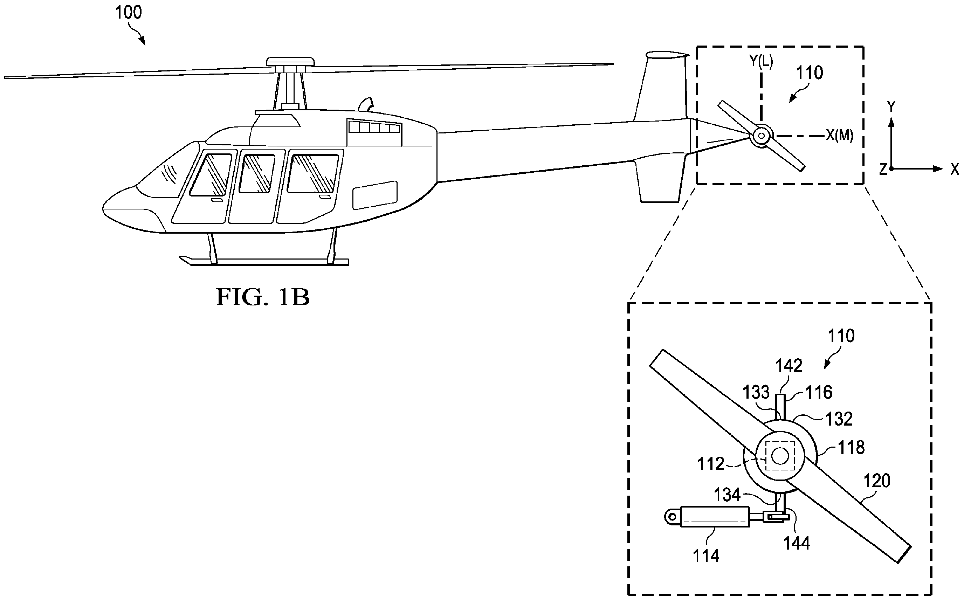

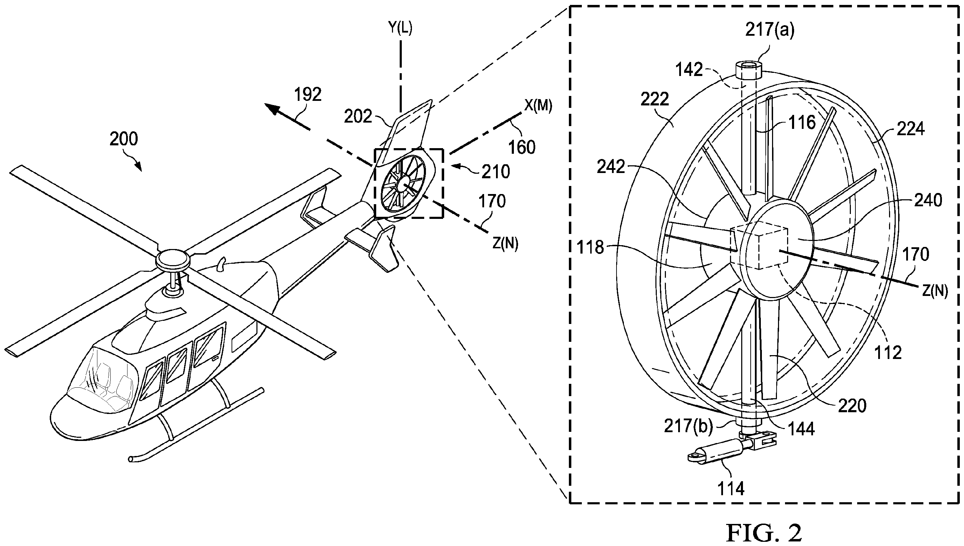

Referring to FIGS. 1A-C, perspective views of an open (i.e., un-ducted) electrically-powered tail rotor system 110 (i.e., tail rotor, tail rotor assembly, tail rotor system, propeller system) for a rotorcraft 100 is shown in a forward-flight position (FIG. 1A) and hover position (FIGS. 1B-C). As shown in FIGS. 1A-C, the tail rotor system 110 includes an electric motor 112, a swiveling actuator 114, a spindle 116, and a hub assembly 118. The hub assembly 118 is configured to position the two or more blades 120 (i.e., blades, rotor blades, fan blades as shown in FIGS. 2-3). Moreover, in response to a control signal, the actuator 114 is configured to actuate swivel rotation of the spindle 116 around a vertical axis (L) (i.e., a first spindle axis, a vertical Y-directional axis) such that the hub assembly 118 pivots from a first directional axis 160 (i.e., a first horizontal directional axis, a first direction) (e.g., X-axis) to a second directional axis 170 (i.e., a second horizontal directional axis, a second direction) (e.g., Z-axis). In one implementation, as shown in FIG. 1A, starting from a forward-flight position (i.e., pusher-propeller position mode), the hub assembly 118 may turn on a pivot (i.e., swivel) a quarter-revolution (i.e., 90°) to a hover position (i.e., anti-torque position, stabilizing position) (as shown in FIGS. 1B-C).

In certain implementations, the spindle (i.e., first spindle) 116 may be of any narrow-elongated shape (e.g., cylindrical tube, rectangular tube). The spindle 116 extends from one end (i.e., a first end 142) of the tail rotor system 110 to another end (i.e., a second end 144). In certain embodiments, the spindle may extend on the vertical Y-axis along a diameter of the tail rotor system 110. As shown in FIGS. 1A-B and 2, in one example, the first spindle 116 may be positioned to enter through the hub assembly 118 from one end 133 (i.e., a top end) of a circumferential curvature 132 of the hub assembly 118, and exit from a second end 134 (i.e., a bottom end) of the circumferential curvature 132. Hence, a pivoting rotation (i.e., rotating about a point, swiveling rotation) of the spindle 116 may, likewise, turn the hub assembly 118 in the same direction (e.g., along the vertical Y-directional-axis (L)). In one case, the spindle 116 may be positioned (to enter) centrally on the circumferential curvature 132. In another case, the spindle 116 may be positioned (to enter) "off-center" on the circumferential curvature 132. In both cases, however, the two or more blades 120 may be positioned in front of the spindle 116 on the circumferential curvature 132 of the hub assembly 118 (on a particular directional axis orientation). Also, in both cases, the spindle's 116 swivel rotation may allow for 0°-180° rotation of the hub assembly 118 (and the blades 120) (on the X-Y directional axes/X-Y plane).

In other examples (not shown), where the hub assembly 118 has a substantially polyhedral shape, the first spindle 116 may be positioned to enter through a top side of the hub assembly 118 and exit from a bottom side of the hub assembly 118. Hence, a swivel rotation of the spindle 116 may likewise rotate the hub assembly in the same direction. In one example (not shown), where the hub assembly 118 has a substantially spherical shape, the first spindle 116 may be positioned to enter through a top end of the hub assembly 118 and exit from a bottom end of the hub assembly 118. In such examples as well, however, the two or more blades 120 may be positioned in front of the spindle 116 on the hub assembly 118 (on a particular directional axis orientation). Also, in both cases, the spindle's 116 swivel rotation may allow for 0°-180° rotation of the hub assembly 118 (and the blades 120) (on the X-Y directional axes/X-Y plane).

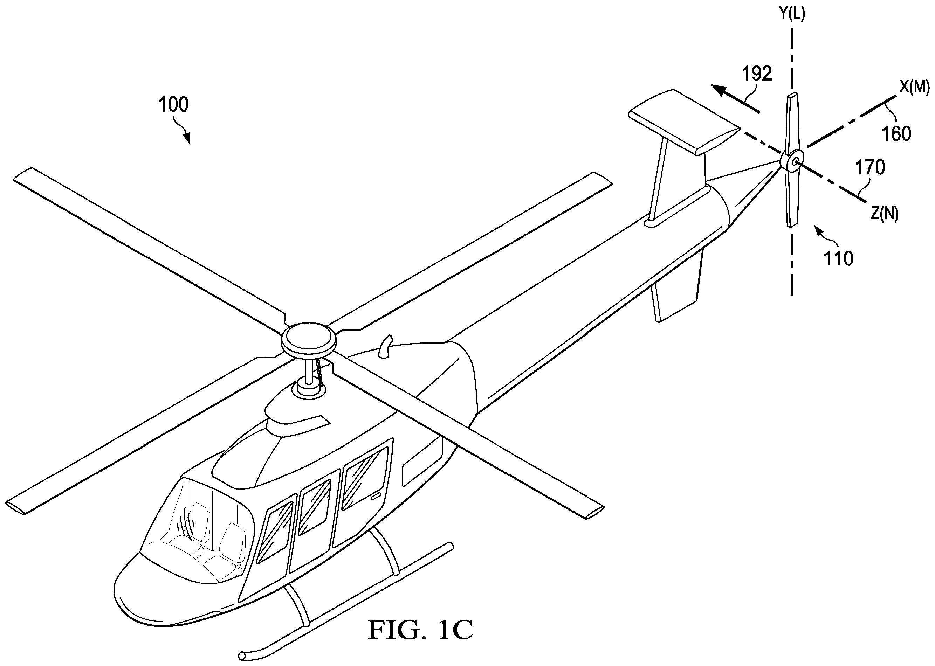

Advantageously, the tail rotor system 110 has the capacity to provide thrust in a first thrust vector 191 on the first directional axis 160 (i.e., a first horizontal directional axis) (during forward-flight) (as shown in FIG. 1A), and in a second thrust vector 192 on the second directional axis 170 (i.e., a second horizontal directional axis) (while hovering) (as shown in FIG. 1C) (to compensate for torque generated by the main rotor of the rotorcraft 110). In another implementation, the hub assembly 118 may rotate 180°. In doing so, a particular thrust vector can be generated in the opposite direction to the first thrust vector 191. In other implementations, the hub assembly 118 may rotate to any directional axes between 0°-180° and allow for respective thrust vectors to be generated on the corresponding directional axes on the X-Y plane.

In certain implementations, the hub assembly 118 may be centrally located in the tail rotor system 110. In one case (as shown in FIG. 2), the hub assembly 118 may have a substantially cylindrical shape. In such a case, the hub assembly 118 may have first and second sides 240, 242 that each correspond to a diameter of the hub assembly 118. Also, as an example implementation, upon a quarter revolution rotation, the first side 240 may pivot from facing the first directional axis 160 to the second directional axis 170. In some other cases (not shown), the hub assembly 118 may have a substantially polyhedral shape. For instance, the hub assembly 118 may be substantially shaped as, but not limited to: a cuboid (e.g., rectangular prism, cube), triangular prism, pentagonal prism, hexagonal prisms, octahedron, etc. In such instances, a first side of the hub assembly 118 may correspond to a diameter of the hub assembly 118.

Moreover, upon a quarter revolution rotation, a first side may pivot from facing the first directional axis 160 to the second directional axis 170. Additionally, for each of above cases, in other implementations, the pivoting of the first side may be in any degree of rotation, from 0°-180°, such that the first side may face respective directional axes on the X-Y plane.

In yet another case, the hub assembly 118 may have a substantially spherical shape. In such a case, the hub assembly 118 may have first and second curved sides that each correspond to a one-half circumference of the hub assembly 118. Also, as an example implementation, upon a quarter revolution rotation, the first curved side may pivot from facing the first directional axis 160 to the second directional axis 170. Additionally, for this case, in other implementations, the pivoting of the first curved side may be in any degree of rotation, from 0°-180°, such that the first curved side may face respective directional axes on the X-Y plane.

The two or more blades 120 may be positioned as elongated blades extending outward from the hub assembly 118. In one implementation, the two or more blades 120 may be configured to rotate around the hub assembly 118 based on a particular directional axis orientation of the hub assembly 118. In an example operation of the two or more blades 120, when the hub assembly 118 is positioned according to the first directional axis 160, the two or more blades may rotate around a first horizontal (M) axis of rotation on one or more Y-Z planes. In a second example operation of the two or more blades 120, when the hub assembly 118 is positioned according to the second directional axis 170, the two or more blades may rotate around a second horizontal (N) axis of rotation on one or more X-Z planes.

The tail rotor system 110 may further include the swiveling actuator 114. As mentioned, in response to one or more control signals (e.g., originating from a fly-by-wire system and coupled to the tail rotor system 100 via electrical wiring), the swiveling actuator 114 may be configured to actuate a pivot rotation (i.e., a swivel rotation) of the spindle 116. Also, the swiveling actuator 114 may be powered by the electric motor 112. The swiveling actuator 114 is positioned proximate to an end of the spindle 116.

The tail rotor system 110 may further employ the electric motor 112 as a tail rotor power source. In some implementations, the electric motor 112 may be any type of electric motor including, but not limited to, linear motors, rotational motors, conventional brushless motors, or thin-gap type motors, coaxial rotors, etc. In some examples, the electric motor may be aligned with or supported by (e.g., housed in) the hub assembly 118. In some other examples, the electric motor 112 may be positioned proximate to a particular end and/or in alignment with the spindle 116 and/or the actuator 114.

Advantageously, by having the electric motor 112 provide power to the tail rotor system 110, a drive shaft may not be required for operation of the tail rotor system 110. Hence, the tail rotor system 110 may be entirely disconnected from the rest of the electrical power components of the rotorcraft (including, a main rotor system and power plant). Advantageously, by providing for full disconnection, instead of collective control to change a thrust vector, the tail rotor system 110 may utilize (i.e., apply, employ) high rotation speed (revolutions per minute (RPM)) (i.e., rotor speed control, RPM control) of the turbine engine of the rotorcraft 100 into low speed for operation of the tail rotor system 110. Moreover, as a further advantage, in a certain case, the use of an electric motor may also allow for a combination of both collective and RPM control. Suitably, the collective control may be a slow rate collective. In such a case, in forward-flight, an inflow velocity may be greater than an inflow static pressure.

In one implementation, the tail rotor system 110 may also be coupled to a reduction gear set (not shown) in a tail gear box. As per safety standards, for manned rotorcrafts, a redundant system for rotation between a forward-flight position to a hover position and vice-versa may be required. Accordingly, a single reduction gear set in the tail rotor gear box may be coupled to the tail rotor system 110 such that the tail rotor system 110 may rotate from the first directional axis 160 to the second directional axis 170. Advantageously, because a powertrain is not required to drive the tail rotor system 110, in such an implementation with a sole gear set, no other gear box may be required for tail rotor operation. Correspondingly, an "offset" vertical rotation that may be distanced from the tail rotor is also not required.

In certain inventive aspects, the example rotorcrafts (100, 200, 300) as described herein include a rotorcraft assembly (including, but not limited to an airframe, fuselage, landing gear, powerplant, transmission, and main rotor system) that is powered by the powerplant (e.g., piston engine, turbine motor(s)) and a tail rotor system (110, 210, 310) powered by an electric motor. The tail rotor system may include the electric motor, a swiveling actuator, a spindle and a hub assembly. In certain implementations, the hub assembly may be configured to position two or more blades. Also, in response to a control signal, the swiveling actuator may be configured to actuate pivot rotation (i.e., swivel rotation, swiveling, rotating about a point) of the spindle around a first spindle axis (i.e., a vertical axis) such that the hub assembly may rotate from a first direction to a second direciton. Moreover, the swiveling actuator may be configured to actuate swivel rotation of the spindle around a vertical spindle axis at the center of the tail rotor system.

Referring to FIG. 2, a perspective view of a ducted electrically-powered tail rotor system 210 (i.e., tail rotor, tail rotor assembly, tail rotor system, propeller system) for an example rotorcraft 200 is shown in the hover position. The tail rotor system 210 may be substantially similar in construction, materials, and operation to the tail rotor system 110 with the notable distinction that the tail rotor system 210 includes a duct 222. As shown in FIG. 2, the tail rotor system 210 includes the electric motor 112, the swiveling actuator 114, the spindle 116, the hub assembly 118, the two or more blades 220 (i.e., two or more fan blades), and the duct 222 (i.e., circular duct). Similar to as shown with reference to FIGS. 1A-C, in response to a control signal, the swiveling actuator 114 of the tail rotor system 210 is configured to actuate swiveling of the spindle 116 around the vertical axis (L) (i.e., first spindle axis, a vertical Y-directional axis) such that the hub assembly 118 pivots from the first directional axis 160 i.e., a first horizontal directional axis, a first direction) (e.g., X-axis) to the second directional axis 170 (i.e., a second horizontal directional axis, a second direction) (e.g., Z-axis). In one implementation, starting from a forward-flight position (i.e., pusher-propeller position mode), the hub assembly 118 may turn on a pivot (i.e., swivel) a quarter-revolution (i.e., 90°) to a hover position (i.e., anti-torque position, stabilizing position).

In certain implementations, as illustrated in FIG. 2, the duct 222 may be aligned to and affixed to a vertical fin 202 of the example rotorcraft 200, while circumferentially enclosing at least the swiveling actuator 114, the spindle 116, the hub assembly 118, and the two or more blades 120. As shown in FIG. 2, the tail rotor system 210 may further include a first sleeve 224 (i.e., ring). The first sleeve 224 may extend on an interior side of the duct 222, such that the duct 222 may circumferentially enclose the first sleeve 224. Upon a swiveling operation of the spindle 116, the first sleeve 224 may be configured to pivot along with the hub assembly 118 and the two or more blades 120. In some cases, when the first sleeve 224, the hub assembly 118, and the two or more blades 120 are pivoting, the duct 222 may remain unmoved (i.e., affixed) and aligned with the vertical fin 202. Advantageously, the inclusion of the duct 222 may allow for uniform pressure distribution within the tail rotor system 210 and improve noise and hover performance.

Also shown in FIG. 2, the tail rotor system 210 may further include first and second spindle bearings 217(a,b) (i.e., first and second rotational bearings). In certain implementations, the first and second spindle bearings 117(a,b) may secure the first and second ends 142, 144 of the spindle 116 to the duct 222, such that when actuated, the motion of the spindle 116 may be constrained to only a desired pivot rotation around the vertical axis (i.e., the first spindle axis).

Moreover, in addition to the description of the two or more blades 220 in above paragraphs, in one implementation of the tail rotor system 210, the two or more blades 220 may include twisted blades, which allow for better flight control performance.

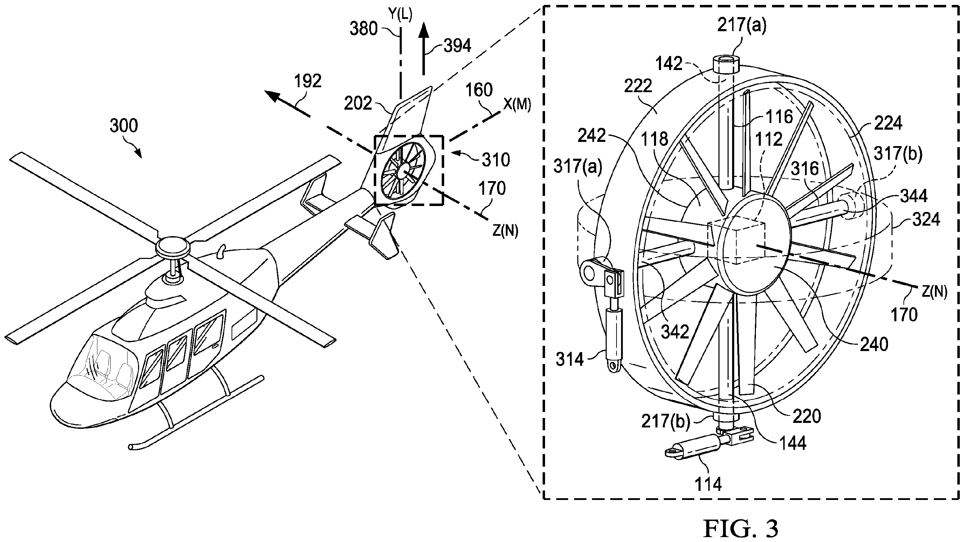

Referring to FIG. 3, a perspective view of a ducted electrically-powered tail rotor system 310 (i.e., tail rotor, tail rotor assembly, tail rotor system, propeller system) for the example rotorcraft 300 is shown in the hover position. The tail rotor system 310 may be substantially similar in construction, materials, and operation to the tail rotor system 210 with the notable distinction that the tail rotor system 210 includes a second spindle 316 (and associated spindle bearings 317(a,b)) and a second swiveling actuator 314. As shown in FIG. 3, the tail rotor system 210 may include the electric motor 112, the first and second swiveling actuators 114, 214, first and second spindles 116, 316, the hub assembly 118, the two or more blades 220 (i.e., two or more fan blades), and the duct 222 (i.e., circular duct).

Expanding on what is shown with reference to FIGS. 1A-B, in response to first and second control signals, in an example operation, the swiveling actuators 114, 314 of the tail rotor system 310 are configured to actuate swiveling of the first and second spindle 116, 316 around the vertical (L) (i.e., first spindle axis, vertical Z-directional axis) and a horizontal axis (i.e., second spindle axis) (e.g., a horizontal X-directional axis or a horizontal Z-directional axis), respectively, such that the hub assembly 118 pivots from the first directional axis 160 (e.g., X-axis) to the second directional axis 170 (e.g., Z-axis), as well as from the first directional axis 160 or the second directional axis 170 to a third directional axis 380 (e.g., Y-axis). In one implementation, starting from a forward-flight position (i.e., pusher-propeller position mode), the hub assembly 118 may pivot a quarter-revolution (i.e., 90°) to a hover position (i.e., anti-torque position, stabilizing position), and subsequently pivot "downward" a quarter-revolution (i.e., 90°). Advantageously, as an example, to compensate for when a center of gravity may be offset (e.g., a yaw or pitch moment), such an implementation may provide vertical direction thrust 394 along the third directional axis 380. In other implementations, swiveling rotations from the first directional axis 160 or the second directional axis 170 to a third directional axis 380 can be of any degree of rotation of the second spindle 316 about the first horizontal axis (M), from 0°-180°, such that a thrust vector can be generated in any directional axis in an 180°-three-dimensional space. Advantageously, such rotational capacity may allow for concurrent pitch and yaw control; thus, allowing for precision in maneuverability.

As shown in FIG. 3, the second spindle 316 may be substantially similar to first spindle 116 in construction and operation. In contrast from the first spindle 116, the second spindle 316 may be positioned on a horizontal axis (e.g., such as the X-axis or the Z-axis). As shown in FIG. 3, the tail rotor system 310 may further include a second sleeve 324 (i.e., a second ring). Similar to the first sleeve 224, the second sleeve 324 may also extend on an interior side of the duct 222, such that the duct 222 may circumferentially enclose the second sleeve 324. Upon a pivot operation of the second spindle 316, the second sleeve 324 may be configured to pivot along with the hub assembly 118 and the two or more blades 120. In some cases, similar to as shown with reference to first sleeve 224, when the second sleeve 324, the hub assembly 118, and the two or more blades 120 are turning, the duct 222 may remain unmoved (i.e., affixed to) and aligned with the vertical fin 202.

As illustrated in FIG. 3, the tail rotor system 310 may further include the second swiveling actuator 314 for actuating swiveling of the second spindle 316. In some implementations, the second swiveling actuator 314 may be similar to as described with reference to the first swiveling actuator 114. Advantageously, the second swiveling actuator 314 along with the second sleeve 324 may allow for an implementation where the two or more blades 120 may be rotated relative to the first sleeve 124 (i.e., the first ring), as well as a second rotation of the second sleeve 324 relative to the rotorcraft 300. Accordingly, in this design implementation, if a control is desired for a little further "forward" or "aft", a pilot (or a computer system in an unmanned rotorcraft operation) may utilize antitorque pedals to achieve a specified yaw rate and thrust for antitorque. Moreover, even in a forward-flight operation, a pilot (or a computer system in an unmanned rotorcraft operation) may have additional capacity to induce "a slight moment" on the rotorcraft for forward or backward tilt (i.e., pitch).

Also shown in FIG. 3, the tail rotor system 310 may further include the third and fourth spindle bearings 317(a,b) (i.e., third and fourth rotational bearings). In certain implementations, the third and fourth spindle bearings 317(a,b) may secure the first and second ends 342, 344 of the second spindle 316 to duct 222, such that when actuated, the motion of the second spindle 316 may be constrained to a desired swiveling around a horizontal axis.

In certain implementations, the two or more blades 220 may be positioned as elongated blades extending outward from the hub assembly 118. In one implementation with reference to the tail rotor system 310, the two or more blades 120 may be configured to rotate around the hub assembly 118 based on a particular directional axis orientation of the hub assembly 118. For example, when the hub assembly 118 is oriented to face a directional axis orientation to a particular XYZ coordinate in the 180°-three-dimensional space, the two or more blades 220 may rotate around a third axis of rotation in a direction oriented to the particular XYZ coordinate.

Also, as an additional advantage, in the case where two coaxial rotors are employed as the electric motor 112 for the tail rotor system 310, the gyroscopic moment effect that may occur during a particular swiveling rotation may be eliminated.

Moreover, in some implementations, for when the first or second spindles 116, 316 are actuated for swiveling rotation, the hub assembly 118 may include openings (i.e., notches, grooves) (not shown) allowing the hub assembly to turn through the respective second or first spindles 116, 316.

In the following description, numerous specific details are set forth to provide a thorough understanding of the disclosed concepts, which may be practiced without some or all of these particulars. In other instances, details of known devices and/or processes have been omitted to avoid unnecessarily obscuring the disclosure. While some concepts will be described in conjunction with specific examples, it will be understood that these examples are not intended to be limiting.

Unless otherwise indicated, the terms "first", "second", etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

Reference herein to "one example" means that one or more feature, structure, or characteristic described in connection with the example is included in at least one implementation. The phrase "one example" in various places in the specification may or may not be referring to the same example.

Many modifications of examples set forth herein will come to mind to one skilled in the art to which the present disclosure pertains having the benefit of the teachings presented in the foregoing descriptions and the associated drawings.

Therefore, it is to be understood that the present disclosure is not to be limited to the specific examples illustrated and that modifications and other examples are intended to be included within the scope of the appended claims. Moreover, although the foregoing description and the associated drawings describe examples of the present disclosure in the context of certain illustrative combinations of elements and/or functions, it should be appreciated that different combinations of elements and/or functions may be provided by alternative implementations without departing from the scope of the appended claims. Accordingly, parenthetical reference numerals in the appended claims are presented for illustrative purposes only and are not intended to limit the scope of the claimed subject matter to the specific examples provided in the present disclosure.

## Claims

1. A tail rotor system (110) of a rotorcraft (100) comprising:
an electric motor (112);
a swiveling actuator (114);
a spindle (116); and
a hub assembly (118) configured to position two or more blades (120), and
wherein in response to a control signal, the swiveling actuator (114) is configured to actuate swivel rotation of the spindle (116) around a vertical axis (L) such that the hub assembly (118) turns from a first horizontal directional axis (160) to a second horizontal directional axis (170),
wherein the spindle (116) extends from one end (142) of the tail rotor system (110) to another end (144) of the tail rotor system (110), and
wherein the swivelling actuator (114) is positioned proximate to an end (133), 134) of the spindle (116).

2. The tail rotor system (110) of claim 1, wherein the electric motor (112) is configured to provide power to the tail rotor system (110).

3. The tail rotor system (110) of claim 1 or 2, wherein the tail rotor system is configured to change a thrust vector (191) by rotor speed control.

4. The tail rotor system (110) of any preceding claim, wherein the first horizontal directional axis corresponds to a forward-flight positioning, and wherein the second horizontal directional axis corresponds to a hover positioning; and/or
wherein the tail rotor system (110) provides first (191) and second (192) thrust vectors on the respective first (160) and second (170) horizontal directional axis.

5. The tail rotor system (110) of any preceding claim, wherein the hub-assembly (118) has one of a substantially cylindrical or polyhedral shape.

6. The tail rotor system (110) of any of claims 1 to 5, wherein the hub assembly (118) has a substantially spherical shape.

7. The tail rotor system (110) of claim 6, wherein a first side of the hub assembly (118) corresponds to a diameter of the hub-assembly, and wherein, upon a one quarter-revolution rotation, the first side rotates from facing the first horizontal directional axis (160) to facing the second horizontal directional axis (170); or the tail rotor system of claim 6, wherein a first curved-side of the hub assembly (118) corresponds to a one-half circumference of the hub assembly (118), and wherein, upon a one quarter-revolution rotation, the first curved-side of the hub assembly (118) rotates from facing the first horizontal direction axis (160) to facing the second horizontal directional axis (170).

8. The tail rotor system (110) of any preceding claim, wherein
i) the two or more blades (120) are configured to rotate around the hub assembly (118) based on a directional axis orientation of the hub assembly (118); and/or.
ii) wherein when the hub assembly (118) is positioned corresponding to the first horizontal directional axis (160), the two or more blades (120) rotate around the first horizontal axis (160) of rotation; and/or
iii) wherein when the hub assembly (118) is positioned corresponding to the second horizontal directional axis (170), the two or more blades (120) rotate around the second horizontal axis (170) of rotation.

9. The tail rotor system (110) of any preceding claim, further comprising:
a reduction gear box configured to perform a rotation around a second vertical axis.

10. The tail rotor system (110) of any preceding claim, further comprising:
a duct (222) configured to circumferentially enclose the two or more blades, the hub assembly, and the spindle, and wherein the duct comprises a first sleeve (224).

11. The tail rotor system (110) of claim 10, wherein, upon a rotation of the tail rotor system (110), the duct (222) is affixed and aligned to a vertical fin (202).

12. The tail rotor system (110) of claim 10 or 11, further comprising:
a second spindle (316);
a second sleeve (324); and
a second swiveling actuator (314),
wherein in response to a second control signal, the second swiveling actuator (314) is configured to actuate swivel rotation of the second spindle (316) around a second spindle axis such that the hub assembly (118) turns from either the first and second horizontal directions (160, 170) to a third direction.

13. The tail rotor system (110) of claim 12, wherein when the hub assembly (118) is positioned in the third direction, the two or more blades (120) rotate around a third axis of rotation; and/or
wherein the tail rotor system (110) is configured to provide thrust in a vertical direction and both yaw-control and pitch-control.

14. The tail rotor system of any preceding claim, wherein the vertical axis is a spindle axis at a center of the tail rotor system.

15. The tail rotor system of any preceding claim, further comprising:
a rotorcraft assembly powered by a main power source.

## Patentansprüche

1. Heckrotorsystem (110) eines Drehflüglers (100), umfassend:
einen Elektromotor (112);
ein Schwenkstellglied (114);
eine Spindel (116); und
eine Nabenanordnung (118), die gestaltet ist, zwei oder mehr Flügel (120) zu positionieren, und
wobei in Reaktion auf ein Steuersignal das Schwenkstellglied (114) gestaltet ist, Schwenkdrehung der Spindel (116) um eine vertikale Achse (L) auszulösen, sodass die Nabenanordnung (118) von einer ersten horizontalen Richtungsachse (160) zu einer zweiten horizontalen Richtungsachse (170) dreht,
wobei sich die Spindel (116) von einem Ende (142) des Heckrotorsystems (110) zu einem anderen Ende (144) des Heckrotorsystems (110) erstreckt und
wobei das Schwenkstellglied (114) nahe einem Ende (133, 134) der Spindel (116) angeordnet ist.

2. Heckrotorsystem (110) nach Anspruch 1, wobei der Elektromotor (112) gestaltet ist, dem Heckrotorsystem (110) Energie bereitzustellen.

3. Heckrotorsystem (110) nach Anspruch 1 oder 2, wobei das Heckrotorsystem gestaltet ist, einen Schubvektor (191) durch Rotordrehzahlsteuerung zu ändern.

4. Heckrotorsystem (110) nach einem vorstehenden Anspruch, wobei die erste horizontale Richtungsachse einer Vorwärtsflugpositionierung entspricht und wobei die zweite horizontale Richtungsachse einer Schwebepositionierung entspricht; und/oder
wobei das Heckrotorsystem (110) einen ersten (191) und zweiten (192) Schubvektor auf der ersten (160) bzw. zweiten (170) horizontalen Richtungsachse bereitstellt.

5. Heckrotorsystem (110) nach einem vorstehenden Anspruch, wobei die Nabenanordnung (118) eine im Wesentlichen zylindrische oder vielflächige Form aufweist.

6. Heckrotorsystem (110) nach einem der Ansprüche 1 bis 5, wobei die Nabenanordnung (118) eine im Wesentlichen kugelförmige Form aufweist.

7. Heckrotorsystem (110) nach Anspruch 6, wobei eine erste Seite der Nabenanordnung (118) einem Durchmesser der Nabenanordnung entspricht und wobei nach einer Drehung mit Viertelumdrehung die erste Seite von der ersten horizontalen Richtungsachse (160) zugewandt zu der zweiten horizontalen Richtungsachse (170) zugewandt dreht; oder das Heckrotorsystem nach Anspruch 6, wobei eine erste gekrümmte Seite der Nabenanordnung (118) einem halben Umfang der Nabenanordnung (118) entspricht und wobei nach einer Drehung mit Viertelumdrehung die erste gekrümmte Seite der Nabenanordnung (118) von der ersten horizontalen Richtungsachse (160) zugewandt zu der zweiten horizontalen Richtungsachse (170) zugewandt dreht.

8. Heckrotorsystem (110) nach einem vorstehenden Anspruch, wobei
i) die zwei oder mehr Flügel (120) gestaltet sind, um die Nabenanordnung (118) basierend auf einer Richtungsachsenausrichtung der Nabenanordnung (118) zu drehen; und/oder
ii) wobei, wenn die Nabenanordnung (118) entsprechend der ersten horizontalen Richtungsachse (160) positioniert ist, die zwei oder mehr Flügel (120) um die erste horizontale Drehachse (160) drehen; und/oder
iii) wobei, wenn die Nabenanordnung (118) entsprechend der zweiten horizontalen Richtungsachse (170) positioniert ist, die zwei oder mehr Flügel (120) um die zweite horizontale Drehachse (170) drehen.

9. Heckrotorsystem (110) nach einem vorstehenden Anspruch, weiter umfassend:
ein Untersetzungsgetriebe, das gestaltet ist, eine Drehung um eine zweite vertikale Achse durchzuführen.

10. Heckrotorsystem (110) nach einem vorstehenden Anspruch, weiter umfassend:
einen Mantel (222), der gestaltet ist, die zwei oder mehr Flügel, die Nabenanordnung und die Spindel um den Umfang zu umschließen, und wobei der Mantel eine erste Hülse (224) umfasst.

11. Heckrotorsystem (110) nach Anspruch 10, wobei nach einer Drehung des Heckrotorsystems (110) der Mantel (222) an einem Seitenleitwerk (202) befestigt und mit diesem ausgerichtet ist.

12. Heckrotorsystem (110) nach Anspruch 10 oder 11, weiter umfassend:
eine zweite Spindel (316);
eine zweite Hülse (324); und
ein zweites Schwenkstellglied (314),
wobei in Reaktion auf ein zweites Steuersignal das zweite Schwenkstellglied (314) gestaltet ist, Schwenkdrehung der zweiten Spindel (316) um eine zweite Spindelachse auszulösen, sodass die Nabenanordnung (118) von einer der ersten und zweiten horizontalen Richtungsachse (160, 170) zu einer dritten Richtung dreht.

13. Heckrotorsystem (110) nach Anspruch 12, wobei, wenn die Nabenanordnung (118) in der dritten Richtung positioniert ist, die zwei oder mehr Flügel (120) um eine dritte Drehachse drehen; und/oder
wobei das Heckrotorsystem (110) gestaltet ist, Schub in einer vertikalen Richtung und sowohl Giersteuerung als auch Blattverstellsteuerung bereitzustellen.

14. Heckrotorsystem nach einem vorstehenden Anspruch, wobei die vertikale Achse eine Spindelachse in einer Mitte des Heckrotorsystems ist.

15. Heckrotorsystem nach einem vorstehenden Anspruch, weiter umfassend:
eine Drehflügleranordnung, die von einer Hauptenergiequelle angetrieben wird.

## Revendications

1. Système de rotor de queue (110) d'un giravion (100) comprenant :
un moteur électrique (112) ;
un actionneur pivotant (114) ;
une broche (116) ; et
un ensemble moyeu (118) configuré pour positionner deux pales (120) ou plus, et
dans lequel en réponse à un signal de commande, l'actionneur pivotant (114) est configuré pour actionner la rotation par pivotement de la broche (116) autour d'un axe vertical (L) de sorte que l'ensemble moyeu (118) tourne d'un premier axe de direction horizontal (160) vers un second axe de direction horizontal (170),
dans lequel la broche (116) s'étend depuis une extrémité (142) du système de rotor de queue (110) vers une autre extrémité (144) du système de rotor de queue (110), et
dans lequel l'actionneur pivotant (114) est positionné à proximité d'une extrémité (133, 134) de la broche (116).

2. Système de rotor de queue (110) selon la revendication 1, dans lequel le moteur électrique (112) est configuré pour fournir de l'énergie au système de rotor de queue (110).

3. Système de rotor de queue (110) selon la revendication 1 ou 2, dans lequel le système de rotor de queue (110) est configuré pour changer un vecteur de poussée (191) au moyen d'une commande de vitesse de rotor.

4. Système de rotor de queue (110) selon l'une quelconque des revendications précédentes, dans lequel le premier axe de direction horizontal correspond à un positionnement de vol vers l'avant, et dans lequel le second axe de direction horizontal correspond à un positionnement stationnaire ; et/ou
dans lequel le système de rotor de queue (110) fournit des premier (191) et second (192) vecteurs de poussée sur les premier (160) et second (170) axes de direction horizontaux respectifs.

5. Système de rotor de queue (110) selon l'une quelconque des revendications précédentes, dans lequel l'ensemble moyeu (118) présente une d'une forme sensiblement cylindrique ou polyédrique.

6. Système de rotor de queue (110) selon l'une quelconque des revendications 1 à 5, dans lequel l'ensemble moyeu (118) présente une forme sensiblement sphérique.

7. Système de rotor de queue (110) selon la revendication 6, dans lequel un premier côté de l'ensemble moyeu (118) correspond à un diamètre de l'ensemble moyeu, et dans lequel, suite à une rotation d'un quart de tour, le premier côté tourne de face au premier axe de direction horizontal (160) à face au second axe de direction horizontal (170) ; ou système de rotor de queue selon la revendication 6, dans lequel un premier côté incurvé de l'ensemble moyeu (118) correspond à une demie circonférence de l'ensemble moyeu (118), et dans lequel, suite à une rotation d'un quart de tour, le premier côté incurvé de l'ensemble moyeu (118) tourne de face au premier axe de direction horizontal (160) à face au second axe de direction horizontal (170).

8. Système de rotor de queue (110) selon l'une quelconque des revendications précédentes, dans lequel
i) les deux pales (120) ou plus sont configurées pour tourner autour de l'ensemble moyeu (118) sur la base d'une orientation d'axe de direction de l'ensemble moyeu (118) ; et/ou
ii) dans lequel lorsque l'ensemble moyeu (118) est positionné de manière à correspondre au premier axe de direction horizontal (160), les deux pales (120) ou plus tournent autour du premier axe horizontal (160) de rotation ; et/ou
iii) dans lequel lorsque l'ensemble moyeu (118) est positionné de manière à correspondre au second axe de direction horizontal (170), les deux pales (120) ou plus tournent autour du second axe horizontal (170) de rotation.

9. Système de rotor de queue (110) selon l'une quelconque des revendications précédentes, comprenant en outre :
une boîte d'engrenage de réduction configurée pour réaliser une rotation autour d'un second axe vertical.

10. Système de rotor de queue (110) selon l'une quelconque des revendications précédentes, comprenant en outre :
un conduit (222) configuré pour enfermer de manière circonférentielle les deux pales ou plus, l'ensemble moyeu et la broche, et dans lequel le conduit comprend un premier manchon (224).

11. Système de rotor de queue (110) selon la revendication 10, dans lequel suite à une rotation du système de rotor de queue (110), le conduit (222) est fixé et aligné sur une ailette verticale (202).

12. Système de rotor de queue (110) selon la revendication 10 ou 11, comprenant en outre :
une seconde broche (316) ;
un second manchon (324) ; et
un second actionneur pivotant (314),
dans lequel en réponse à un second signal de commande, le second actionneur pivotant (314) est configuré pour actionner la rotation par pivotement de la seconde broche (316) autour d'un second axe de broche de sorte que l'ensemble moyeu (118) tourne de l'une ou l'autre des première et deuxième directions horizontales (160, 170) vers une troisième direction.

13. Système de rotor de queue (110) selon la revendication 12, dans lequel lorsque l'ensemble moyeu (118) est positionné dans la troisième direction, les deux pales (120) ou plus tournent autour d'un troisième axe de rotation ; et/ou
dans lequel le système de rotor de queue (110) est configuré pour fournir une poussée dans une direction verticale et à la fois une commande de lacet et une commande de tangage.

14. Système de rotor de queue selon l'une quelconque des revendications précédentes, dans lequel l'axe vertical est un axe de broche au niveau d'un centre du système de rotor de queue.

15. Système de rotor de queue selon l'une quelconque des revendications précédentes, comprenant en outre :
un ensemble giravion alimenté par une source d'alimentation principale.
